# EUROPÄISCHE PATENTSCHRIFT

(11) **EP 0 995 359 B1**
(45) Veröffentlichungstag und Bekanntmachung des Hinweises auf die Patenterteilung: **10.05.2000**
(21) Anmeldenummer: 98119655.3
(22) Anmeldetag: 17.10.1998
(51) Int. Cl.: A23G 3/00, A23G 3/02

(54) **Verfahren zum Herstellen von Marzipan**
Process for making marzipan
Procédé de fabrication de pâte d'amandes

(43) Veröffentlichungstag der Anmeldung: 26.04.2000
(73) Patentinhaber: SCHWARTAUER WERKE GmbH & Co, 23611 Bad Schwartau (DE)
(72) Erfinder: Kreter, Andreas, D-23611 Bad Schwartau (DE); Gotsch, Günter, D-23863 Scharbeutz (DE)
(74) Vertreter: von Raffay, Vincenz, Dipl.-Ing.

(56) Entgegenhaltungen:
- DE-A- 1 932 838
- DE-C- 3 337 351
- DE-C- 4 307 258
- US-A- 4 081 570

## Beschreibung

Die Erfindung betrifft ein Verfahren zum Herstellen von Marzipan nach dem Oberbegriff des Anspruches 1.

Derartige Verfahren sind hinlänglich im Stand der Technik bekannt. Verwiesen wird hierzu beispielsweise auf die DE-C1-33 37 351 der vorliegenden Anmelderin, die - wie alle vorbekannten Verfahren - über das Produkt der Marzipan-Rohmasse ablaufen (siehe auch Römpp's Lexikon Lebensmittelchemie, S. 524, 1995). Danach ist Marzipan eine Mischung aus Marzipan-Rohmasse, die höchstens 17% Feuchtigkeit und höchstens 35% Zucker enthält, und höchstens der gleichen Menge Zucker. Dieser Zucker wird üblicherweise als Staubzucker zugesetzt. Der Zusatz des Staubzuckers kann sofort nach der Herstellung oder nach dem Auskühlen erfolgen.

Unter Zugrundelegung dieser Leitsätze ergibt sich eine Zusammensetzung für Marzipan wie folgt:
- 24,0 %: Mandelkerntrockensubstanz
- bis zu 67,5 %: Saccharose des Anteiles Saccharose aus der Mandeltrockensubstanz (bei 17 % Feuchte der Rohmasse)
- bis zu 8,5 %: Wasser (bei dem maximalen Anwirkverhältnis 50 : 50) sonst mehr.
Diese findet auch bei dem hier beschriebenen Verfahren Anwendung.

Physikalisch betrachtet ist Marzipan ein mehrphasiges System aus einer geschlossenen flüssigen Phase, bestehend aus vorwiegend gesättigter Lösung von Zuckern, wie Saccharose, Invertzucker und durch die Leitsätze für Ölsamen zugelassenen anderen Zuckerarten, sowie einigen mandeleigenen Zuckern und einer hierin fein verteilten festen Phase, bestehend aus nicht mehr in der flüssigen Phase löslichem Staubzucker, nicht löslicher Mandelsubstanz, wie Eiweiß und Rohfaser und mit in Zellsubstanz eingeschlossenem Fett sowie einer weiteren flüssigen Phase in Form von Tröpfchen aus Mandelöl, welches beim Herstellungsprozeß aus der Zellsubstanz der Mandel ausgetreten ist. Außerdem enthält sowohl Marzipanrohmasse als auch Marzipan eine gasförmige Phase in Form von Luftbläschen.

Bei den herkömmlichen Herstellungsverfahren für Rohmasse findet bei dem bekannten Herstellungsverfahren die Sterilisationsphase in einer hochgesättigten Zuckerlösung statt, so daß hierbei, bedingt durch den zu geringen Feuchtigkeitsanteil, der Abtötungseffekt der Mikroorganismen recht unvollständig ist.

Der vorliegenden Erfindung liegt deshalb die Aufgabe zugrunde, das eingangs genannte Verfahren derart zu verbessern, daß der Sterilisationsgrad erhöht und die Herstellungsweise vereinfacht werden kann.

Diese Aufgabe wird durch das erfindungsgemäße Verfahren gemäß Anspruch 1 gelöst.

Überraschenderweise kann also auf den separaten Herstellungsschritt der Rohmasse verzichtet und trotzdem ein stabiles Gleichgewicht zwischen fester und flüssiger Phase erreicht werden.

Beim erfindungsgemäßen Verfahren wird in einer Teilstufe der Anteil an geschälten Mandelkernen allein oder mit einer geringen Zuckermenge mit (z.B. 10 % Zucker bezogen auf Mandeltrockensubstanz) und je nach gewünschtem Endwassergehalt mit einem Zusatz an Wasser (bis zu 8,5 % auf Endprodukt) auf die gewünschte Endfeinheit chargenweise oder kontinuierlich auf bekannten Anlagen zerkleinert.

Diese zerkleinerte Masse mit Wasser oder nur einer ungesättigten Saccharoselösung als flüssige Phase wird anschliessend erhitzt und nach genügender Temperatur-Zeit-Einwirkung zur Sterilisation mit Staubzucker vermischt. Vor dem Vermischen mit dem Staubzucker kann die erhitzte und sterilisierte Masse gekühlt werden.

Die Erhitzung erfolgt vorteilhafterweise durch direktes Einleiten von gereinigtem Dampf unter Berücksichtigung des Wassers aus dem kondensierenden Dampf in der Rezeptur chargenweise oder kontinuierlich bzw. durch Erhitzen in chargenweise oder kontinuierlich arbeitenden Apparaten, die dadurch gekennzeichnet sind, daß die Wärmeaustauschfläche dieser Apparate auf der Produktseite durch mechanische Schaben von Produktansatz freigehalten werden.

Das Kühlen kann chargenweise oder kontinuierlich durch Anlegen von Vakuum, in dem das aus der Masse verdampfende Wasser diese durch Entzug der Verdampfungswärme abkühlt, oder in chargenweise oder kontinuierlich arbeitenden Apparaten, die dadurch gekennzeichnet sind, daß die Wärmeaustauschfläche dieser Apparate auf der Produktseite durch mechanische Schaben von Produktansatz freigehalten werden, erfolgen.

Während des Kühlvorganges an Wärmeaustauschflächen kann auch schon ein Einbringen und Unterschlagen von Luft stattfinden.

Die Vermischung der erhitzten Masse mit Staubzucker wird direkt oder auch nach Kühlen der erhitzten Masse in den jeweiligen Anteilen gemäß Rezeptur durchgeführt. Dieser Mischvorgang kann sowohl diskontinuierlich oder kontinuierlich erfolgen. Während dieses Mischvorganges kann auch gleichzeitig ein Kühlen und Unterschlagen von Luft stattfinden, so daß die gewünschte Konsistenz des Endproduktes erreicht wird.

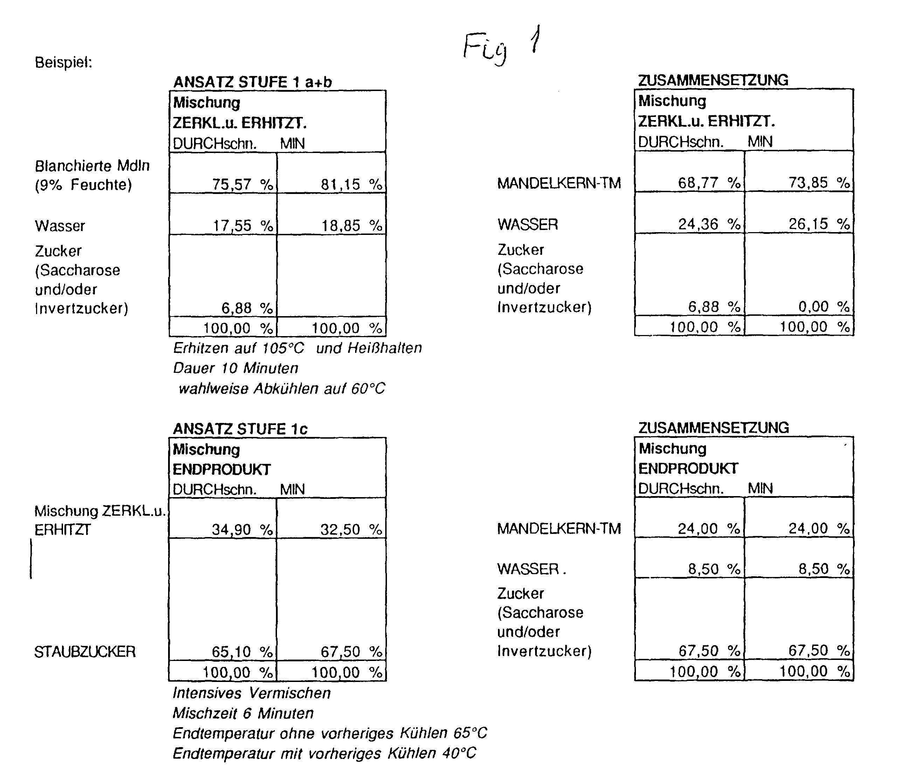

Ein erfindungsgemässes Ausführungsbeispiel ist in Fig. 1 in tabellarischer Form für die einzelnen Verfahrensstufen a. + b. einerseits und c. andererseits mit ihrer entsprechenden Zusammensetzung angegeben. Abweichungen hiervon im Rahmen der Ansprüche sind jedoch für den Fachmann ohne weiteres möglich.

## Patentansprüche

1. Verfahren zum Herstellen von Marzipan, das eine Mischung von 24 Gew% Mandelkerntrockensubstanz, höchstens 8,5 Gew% Wasser und 67,5 Gew% Zucker, in Form von Saccharose, evtl. unter Verwendung von Invertzucker, maximal 3,5 Gew% Stärke-Sirup oder maximal 5 Gew% Sorbit, sowie gegebenenfalls Antioxidantien, Konservierungsmittel und Farbstoffe umfasst,
gekennzeichnet durch folgende Stufen:
unter Verzicht auf die Zubereitung einer Marzipan-Rohmasse
a. Versetzen der geschälten Mandelkerne mit Wasser oder einer ungesättigten wässrigen Zuckerlösung, und Zerkleinern der Masse,
b. Erhitzen der entstandenen Fest-Flüssig-Mischung, ggf. mit darauffolgender Abkühlung,
c. anschließendes Vermischen der Mischung mit einer Haupt- oder Gesamtmenge an Staubzucker.

2. Verfahren nach Anspruch 1, dadurch gekennzeichnet, daß die Stufe b. für bis zu 10 Minuten bei einer Temperatur im Bereich von bis zu 105°C durchgeführt wird.

3. Verfahren nach Anspruch 1 und 2, dadurch gekennzeichnet, daß in der Stufe b. die Masse auf bis zu 40°C abgekühlt wird.

4. Verfahren nach den Ansprüchen 1 bis 3, dadurch gekennzeichnet, daß die wässrige Zuckerlösung einen Anteil bis zu 10 Gew% Zucker bezogen auf die Mandelsubstanz besitzt.

## Claims

1. Process for the production of marzipan, which comprises a mixture of 24 wt.% almond kernel dry substance, max 8.5 wt.% water and 67.5 wt.% sugar, in the form of saccharose, optionally accompanied by the use of inverted sugar, max 3.5 wt.% starch syrup or max 5 wt.% sorbitol, as well as optionally antioxidants, preservatives and dyes, characterized by the following stages:
whilst avoiding the preparation of a marzipan raw mass
a. mixing the peeled almond kernels with water or an unsaturated aqueous sugar solution and crushing the mass,
b. heating the resulting solid-liquid mixture, optionally with subsequent cooling,
c. subsequent mixing of the mixture with a main or total powdered sugar quantity.

2. Process according to claim 1, characterized in that stage b. is carried out for up to 10 minutes at a temperature of up to 105°C.

3. Process according to claims 1 and 2, characterized in that the mass is cooled to 40°C in stage b.

4. Process according to claims 1 to 3, characterized in that the aqueous sugar solution has up to 10 wt.% sugar, based on the almond substance.

## Revendications

1. Procédé pour la fabrication de massepain qui comprend un mélange de 24 % en poids de matière sèche de noyaux d'amandes, d'au maximum 8,5 % d'eau et de 67,5 % de sucre, sous forme de saccharose, éventuellement en utilisant du sucre interverti, au maximum 3,5 % de sirop d'amidon ou au maximum 5 % de sorbitol ainsi qu'éventuellement des antioxygènes, des conservateurs et des colorants,
caractérisé par les étapes suivants :
a. Mélange des noyaux d'amandes décortiquées avec de l'eau ou une solution de sucre aqueuse insaturée et broyage de la masse,
b. Réchauffement du mélange solide/liquide créé, le cas échéant avec refroidissement consécutif,
c. Mélange consécutif du mélange avec une quantité principale ou totale de sucre glace.

2. Procédé selon la revendication 1, caractérisé en ce que l'étape b. est réalisée pour une durée allant jusqu'à 10 minutes à une température de l'ordre de 105°C maximum.

3. Procédé selon les revendications 1 et 2, caractérisé en ce que la masse est refroidie dans la phase b. à 40'C maximum.

4. Procédé selon les revendications 1 à 3, caractérisé en ce que la solution de sucre aqueuse possède une proportion de 10% en poids de sucre maximum par rapport à la substance des amandes.
